(19) Europäisches Patentamt
European Patent Office
Office européen des brevets

(11) **EP 2 379 217 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(21) Anmeldenummer: **09799608.6**

(22) Anmeldetag: **16.12.2009**

(51) Int Cl.:
**B01J 8/06** (2006.01)     **C01B 32/80** (2017.01)

(86) Internationale Anmeldenummer:
**PCT/EP2009/067239**

(87) Internationale Veröffentlichungsnummer:
**WO 2010/076209 (08.07.2010 Gazette 2010/27)**

(54) **REAKTOR UND VERFAHREN ZUR HERSTELLUNG VON PHOSGEN**

REACTOR AND METHOD FOR PRODUCING PHOSGENE

RÉACTEUR ET PROCÉDÉ DE FABRICATION DE PHOSGÈNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008 EP 08171726**

(43) Veröffentlichungstag der Anmeldung:
**26.10.2011 Patentblatt 2011/43**

(73) Patentinhaber: **BASF SE**
**67056 Ludwigshafen am Rhein (DE)**

(72) Erfinder:
• **OLBERT, Gerhard**
**69221 Dossenheim (DE)**
• **GERLINGER, Wolfgang**
**67117 Limburgerhof (DE)**
• **KIM, Byoung Yeon**
**JunJam (KR)**

(74) Vertreter: **BASF IP Association**
**BASF SE**
**G-FLP-C006**
**67056 Ludwigshafen (DE)**

(56) Entgegenhaltungen:
**EP-A1- 1 813 346          WO-A1-03/072237**
**DE-A1-102004 041 777**

EP 2 379 217 B1

**Beschreibung**

Die Erfindung betrifft einen Reaktor und ein Verfahren zur Herstellung von Phosgen durch Gasphasenreaktion von Kohlenmonoxid und Chlor in Gegenwart eines Feststoffkatalysators.

Phosgen wird großtechnisch in einer katalytischen Gasphasenreaktion von Kohlenmonoxid und Chlor in Gegenwart eines Feststoffkatalysators, bevorzugt Aktivkohle, hergestellt. Die Reaktion ist stark exotherm, die Bildungsenthalpie beträgt -107,6 kJ/mol. Die Reaktion wird in der Regel in einem Rohrbündelreaktor nach dem in Ullmanns Enzyklopädie der technischen Chemie, Vol. A 19, Seite 413 bis 414 beschriebenen Verfahren, hergestellt. Danach wird der körnige Katalysator, mit einer Korngröße im Bereich von 3 bis 5 mm, in Rohren mit einem Innendurchmesser zwischen 50 und 70 mm eingesetzt. Bei 40 bis 50°C springt die Reaktion an, die Temperatur steigt in den Rohren bis auf etwa 580°C und fällt dann wieder ab. Kohlenmonoxid wird in geringem Überschuss eingesetzt, um zu gewährleisten, dass das gesamte Chlor umgesetzt wird und um chlorfreies Phosgen zu erhalten. Die Reaktion kann drucklos oder unter Druck durchgeführt werden, häufig bei 2 bis 5 bar, um das Phosgen bereits mit Kühlwasser kondensieren zu können.

Phosgen ist ein wichtiger Hilfsstoff bei der Herstellung von Zwischen- und Endprodukten in nahezu allen Zweigen der Chemie. Das mengenmäßig größte Verwendungsgebiet ist die Herstellung von Diisocyanaten für die Polyurethanchemie, insbesondere von Toluylendiisocyanat und von 4,4-Diisocyanat-diphenylmethan.

Zur besseren Abführung der Reaktionswärme über den zwischen den Kontaktrohren zirkulierende Wärmeträger werden Umlenkbleche zwischen den Kontaktrohren eingebaut, die eine Queranströmung der Kontaktrohre durch den Wärmeträger bewirken.

Bekannte Rohrbündelreaktoren für die Herstellung von Phosgen sind zwecks maximaler Raumausnutzung im Reaktorinnenraum vollständig berohrt. Sie weisen Umlenkbleche zwischen den Kontaktrohren auf, die relativ kurz gehalten sind, d.h. sie reichen im Umlenkbereich nicht bis zur Reaktorinnenwand, sondern lassen jeweils einen Anteil von etwa 25 bis 30 % des gesamten Reaktorquerschnitts frei, um den Druckabfall des Wärmeträgers und somit die Betriebskosten für die Umwälzpumpe des Wärmeträgers zu begrenzen. Im Umlenkbereich ändert sich das Strömungsprofil des Wärmeträgers um die Kontaktrohre von Queranströmung auf Längsanströmung. Die Kontaktrohre werden schlechter gekühlt, und in der Folge treten an den Kontaktrohren im Umlenkbereich Korrosionsprobleme auf.

Die WO 03/072237 beschreibt einen verbesserten Reaktor zur Herstellung von Phosgen, der eine erhöhte spezifische Querschnittsbelastung und somit eine höhere Kapazität ermöglicht, indem die Korrosionsprobleme an den Kontaktrohren im Umlenkbereich vermieden werden. Hierzu schlägt die WO 03/072237 einen Reaktor mit einem Bündel von parallel zueinander, in Reaktorlängsrichtung angeordneten Kontaktrohren vor, die an ihren Enden in Rohrböden befestigt sind, mit je einer Haube an beiden Enden des Reaktors, sowie mit senkrecht zur Reaktorlängsrichtung im Zwischenraum zwischen den Kontaktrohren angeordneten Umlenkblechen, die alternierend einander gegenüberliegende Durchtrittsöffnungen an der Reaktorinnenwand freilassen, wobei die Kontaktrohre mit dem Feststoffkatalysator befüllt sind, das gasförmige Reaktionsgemisch von einem Reaktorende über eine Haube durch die Kontaktrohre geleitet und vom entgegengesetzten Reaktorende über die zweite Haube abgezogen und durch den Zwischenraum um die Kontaktrohre ein flüssiger Wärmeträger geleitet wird und wobei der Reaktor im Bereich der Durchtrittsöffnungen unberohrt ist.

Es hat sich jedoch gezeigt, dass bei Reaktoren mit größerem Durchmesser, insbesondere ab Reaktordurchmessern von etwa 3 m, mit Zunahme des Reaktordurchmessers der Druckverlust des im Mantelraum strömenden Wärmeträgers über den Reaktorquerschnitt, von der einen bis zur gegenüberliegenden Durchtrittsöffnung an der Reaktorinnenwand zu groß wird. Darüber hinaus werden auch die Verluste an Wärmeträger und somit der Druckverlust über die Spalte zwischen der Außenwand der Kontaktrohre und den Umlenkblechen, die aus fertigungstechnischen Gründen vorhanden sind, zu groß. Entsprechend wird der Pumpaufwand für den Wärmeträger zu groß.

Darüber hinaus führt der große Druckverlust über den Reaktorquerschnitt zwischen den beiden einander gegenüberliegenden Durchtrittsöffnungen an der Reaktorinnenwand zu größeren Unterschieden der Wärmeübergangskoeffizienten an der Grenzschicht zwischen den Kontaktrohren und dem Wärmeträger, wobei durchaus Faktoren von 1 : 2 zwischen Bereichen mit gutem Wärmeübergang und Bereichen mit schlechtem Wärmeübergang innerhalb eines Reaktorquerschnittes auftreten können. Entsprechend werden die Kontaktrohre in den Bereichen mit schlechtem Wärmeübergang schlechter gekühlt. Da die Kontaktrohre jedoch, abhängig vom eingesetzten Werkstoff, insbesondere Duplexstahl, eine maximale Temperaturbelastung aufweisen, häufig im Bereich von etwa 160 bis 200°C, insbesondere von etwa 170 bis 180°C, die nicht überschritten werden darf, weil ansonsten die Korrosion des Werkstoffs stark ansteigt, limitieren die Bereiche mit schlechtem Wärmeübergang den Durchsatz und damit die Kapazität des Reaktors.

Es war demgegenüber Aufgabe der Erfindung, eine technisch einfache und elegante Lösung zur Verfügung zu stellen, die es erlaubt, großtechnische Reaktoren zur Herstellung von Phosgen, mit großen Reaktordurchmessern, von über 2 oder auch über 3,5 m, mit einem höheren Durchsatz gegenüber bekannten Reaktoren zu betreiben, ohne dass es hierfür erforderlich wäre, die Umwälzmenge an Wärmeträger zu erhöhen, und wobei gleichzeitig die Korrosionsproblematik durch eine Angleichung der Wärmeübergangskoeffizienten an der Grenzschicht zwischen Kontaktrohren und Wärmeträger über den Reaktorquerschnitt reduziert wird.

Ein ähnlicher Reaktor ist weiterhin aus EP 1 813 346 A1 bekannt.

Die Lösung besteht in einem Reaktor entsprechend der Definition in Anspruch 1.

Es wurde gefunden, dass es möglich ist, die Wärmeübergangskoeffizienten an der Grenzschicht zwischen Kontaktrohren und Wärmeträger über den Reaktorquerschnitt einander weitgehend anzugleichen, und entsprechend kritische Bereiche, mit hohen Wärmeübergangskoeffizienten, das heißt mit schlechtem Wärmeübergang durch eine geänderte Anordnung der Kontaktrohre, weitgehend zu reduzieren.

Für die Strömung des Wärmeträgers im Mantelraum des Reaktors zwischen zwei Umlenkblechen, innerhalb eines Reaktorquerschnitts, von einem rohrfreien Bereich (Durchtrittsöffnung) zum gegenüberliegenden rohrfreien Bereich, jeweils an der Reaktorinnenwand, ist der Druckverlust derselbe für alle Strömungswege des Wärmeträgers.

Der Druckverlust $\Delta p$ kann durch die nachfolgende Gleichung beschrieben werden:

$$\Delta p = l/d_R \left( \zeta_1 \cdot \eta \cdot v + \zeta_2 \cdot \rho/2 \, v^2 \right),$$

wobei $\Delta p$ den Druckverlust in Pascal, $\xi_1$ und $\xi_2$ die dimensionslosen Druckverlustkoeffizienten (Druckverlustbeiwerte), $l$ die Länge des Strömungsweges in m, $d_R$ den Durchmesser eines Kontaktrohres (charakteristische Größe) in m, $\rho$ die Dichte in kg/m$^3$, $v$ die Geschwindigkeit in m/s und $\eta$ die Viskosität in Pa $\cdot$ s, bezeichnet.

In der obigen Formel entspricht der erste Term einem laminar geprägten Teil des Druckverlustes, der proportional zur Geschwindigkeit ist und der zweite Term einem turbulent geprägten Teil, der proportional zum Quadrat der Geschwindigkeit ist.

Da der Druckverlust für jeden Strömungsweg derselbe ist, ist, bei ansonsten unveränderten Bedingungen, insbesondere bei gleicher Rohrteilung, für kürzere Strömungswegen, wie sie in der Mitte des Rohrspiegels eines Reaktors nach dem Stand der Technik, mit einander gegenüberliegenden Begrenzungen des Bündels von Kontaktrohren in Form von Kreissehnen, gegenüber Strömungswegen an der Reaktorinnenwand, die Geschwindigkeit des Wärmeträgers nach der obigen Formel für den Druckverlust entsprechend größer. Da der Wärmeübergangskoeffizient $\alpha$ näherungsweise direkt proportional zur Geschwindigkeit hoch 0,8 ist, ergeben sich für die längeren Strömungswege, am Reaktorinnenmantel, niedrigere Strömungsgeschwindigkeiten des Wärmeträgers und entsprechend niedrigere Wärmeübergangskoeffizienten, das heißt ein schlechterer Wärmeübergang, gegenüber den kürzeren Strömungswegen, in der Reaktormitte.

Der erfindungsgemäße Reaktor ist zylinderförmig ausgebildet, mit einem Innendurchmesser von bevorzugt 0,5 bis 6 m, weiter bevorzugt von 2,5 bis 6 m, insbesondere von 3,5 bis 6 m.

Im Reaktor ist ein Bündel, das heißt eine Vielzahl von Kontaktrohren, parallel zueinander in Reaktorlängsrichtung angeordnet.

Die Anzahl der Kontaktrohre liegt bevorzugt im Bereich von 100 bis 10000, insbesondere von 1000 bis 3500.

Die Kontaktrohre sind aus einem korrosionsfesten Material, beispielsweise Edelstahl, bevorzugt Duplexstahl 1.4462, Edelstahl 1.4571 oder Edelstahl 1.4541 oder auch aus Nickel-Basislegierungen oder aus Nickel gebildet. Bevorzugt sind auch die Rohrböden oder auch der gesamte Reaktor aus den vorerwähnten Werkstoffen, insbesondere aus Duplex- oder Edelstahl gebildet.

Es ist auch möglich, die Rohrböden mit den oben erwähnten Werkstoffen lediglich zu plattieren.

Jedes Kontaktrohr weist bevorzugt eine Wandstärke im Bereich von 2,0 bis 4,0 mm, insbesondere von 2,5 bis 3,0 mm, und einen Rohrinnendurchmesser im Bereich von 20 bis 90 mm, bevorzugt im Bereich von 30 bis 50 mm auf.

Die Kontaktrohre weisen bevorzugt eine Länge im Bereich von 1,5 bis 6,0 m, insbesondere im Bereich von 2,50 bis 4,50 m, auf.

Die Kontaktrohre sind bevorzugt derart im Reaktorinnenraum angeordnet, dass das Verhältnis zwischen dem Abstand der Mittelpunkte unmittelbar benachbarter Kontaktrohre und dem Außendurchmesser der Kontaktrohre im Bereich von 1,15 bis 1,4, bevorzugt im Bereich von 1,2 bis 1,3 liegt und dass die Kontaktrohre in Dreiecksteilung im Reaktor angeordnet sind.

Die Kontaktrohre sind an beiden Enden in Rohrböden flüssigkeitsdicht befestigt, bevorzugt verschweißt. Die Rohrböden bestehen ebenfalls aus einem korrosionsfesten Material, bevorzugt Edelstahl, insbesondere Duplexstahl, besonders bevorzugt aus dem selben Material wie die Kontaktrohre.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen. Die Hauben sind bevorzugt abnehmbar ausgestaltet und bevorzugt mit Schweißlippendichtungen versehen.

In den Hauben sind bevorzugt Gasverteiler zur Vergleichmäßigung des Gasstromes angeordnet, beispielsweise in Form einer Platte, insbesondere einer perforierten Platte.

Im Zwischenraum zwischen den Kontaktrohren sind senkrecht zur Reaktorlängsrichtung Umlenkbleche angeordnet, die alternierend einander gegenüberliegende Durchtrittsöffnungen an der Reaktorinnenwand freilassen. Die Umlenkbleche bewirken eine Umlenkung des im Reaktorinnenraum, im Zwischenraum zwischen den Kontaktrohren zirkulierenden Wärmeträgers, dergestalt, dass die Kontaktrohre vom Wärmeträger quer angeströmt werden, wodurch die Wärmeabführung verbessert wird. Um diese vorteilhafte Queranströmung der Kontaktrohre zu erreichen, müssen die Umlenkbleche alternierend an den einander gegenüberliegende Seiten der Reaktorinnenwand Durchtrittsöffnungen für den Wärmeträger freilassen.

Die Anzahl der Umlenkbleche beträgt bevorzugt etwa 5 bis 21. Vorzugsweise sind die Umlenkbleche äquidistant zu einander angeordnet, besonders bevorzugt ist jedoch das unterste und das oberste Umlenkblech jeweils vom Rohrboden weiter entfernt als der Abstand zweier aufeinander folgender Umlenkbleche zueinander, bevorzugt um etwa das 1,5-fache.

Die freigelassenen Durchtrittsöffnungen sind zunächst kreissegmentförmig.

Im Bereich der Durchtrittsöffnungen ist der Reaktor unberohrt, das heißt er ist frei von Kontaktrohren.

Bevorzugt lassen alle Umlenkbleche jeweils gleiche Durchtrittsöffnungen frei.

Die Fläche jeder Durchtrittsöffnung beträgt bevorzugt 5 bis 20 %, insbesondere 8 bis 14 % des Reaktorquerschnitts.

Bevorzugt sind die Umlenkbleche nicht dichtend um die Kontaktrohre angeordnet, und lassen eine Leckageströmung von bis zu 40 Vol.-% des Gesamtstroms des Wärmeträgers zu. Hierzu sind zwischen den Kontaktrohren und Umlenkblechen Spalte im Bereich von 0,1 bis 0,6 mm, bevorzugt von 0,2 bis 0,4 mm vorgesehen.

Es ist vorteilhaft, die Umlenkbleche mit Ausnahme der Bereiche der Durchtrittsöffnungen zur Reaktorinnenwand hin flüssigkeitsdicht zu gestalten, so dass dort kein zusätzlicher Leckagestrom auftritt.

Die Umlenkbleche werden bevorzugt aus einem korrosionsfesten Material, bevorzugt Edelstahl, insbesondere Duplexstahl, bevorzugt in einer Dicke von 8 bis 30 mm, bevorzugt von 10 bis 20 mm, gebildet.

Die Kontaktrohre sind mit einem Feststoffkatalysator, bevorzugt Aktivkohle, gefüllt. Die Katalysatorschüttung in den Kontaktrohren weist bevorzugt ein Lückenvolumen von 0,33 bis 0,5, insbesondere von 0,33 bis 0,40, auf.

Indem die Umlenkbleche zunächst kreissegmentförmige Aussparungen aufweisen, und entsprechend Durchtrittsöffnungen an der Reaktorinnenwand freilassen, die kreissegmentförmig ausgebildet sind, werden der Rohrspiegel, das heißt der Querschnitt durch die Kontaktrohre in einer horizontalen Ebene zwischen zwei aufeinander folgenden

Umlenkblechen, da die Durchtrittsöffnungen unberohrt sind, ebenfalls zwei einander gegenüberliegende kreissegmentförmige Aussparungen an der Reaktorinnenwand aufweisen.

Erfindungsgemäß wird, ausgehend von der oben beschriebenen Anordnung der Kontaktrohre entsprechend der Druckschrift WO 03/072237, die Anordnung der Kontaktrohre modifiziert, indem die seitlichen Begrenzungen des Bündels von Kontaktrohren im Rohrspiegel von Kreissehnen zu Kreisbögen hin geändert werden. Es wird somit gegenüber einem Reaktor nach dem Stand der Technik die Anzahl der Kontaktrohre auf dem längsten Strömungsweg des Wärmeträgers an der Reaktorinnenwand am stärksten reduziert, und in der Reaktormitte, entsprechend erhöht. Dabei ist es nicht erforderlich, dass die seitlichen Begrenzungen des Bündels von Kontaktrohren bei der erfindungsgemäßen Anordnung der Kontaktrohre genau einer Kreisbogenform entsprechen, es ist lediglich bevorzugt, dass sie sich einer Kreisbogenform annähern.

Insbesondere können die seitlichen Begrenzungen des Bündels von Kontaktrohren hin zu jeweils einer polygonalen Linie geändert werden, die jeweils in einen Kreisbogen einbeschrieben ist.

In einer weiteren Ausführungsform können die Wärmeübergangskoeffizienten an der Grenzschicht zwischen den Kontaktrohren und dem Wärmeträger in der Weise einander angeglichen werden, indem in den Bereichen mit dem schlechtesten Wärmeübergang, das heißt in den reaktorinnenwandnahen Bereichen mit den längsten Strömungswegen des Wärmeträgers, Dummy-Rohre eingebaut werden, oder indem aus diesem Bereich Kontaktrohre herausgenommen werden. Darüber hinaus ist es auch möglich, in den korrosionsgefährdeten Bereichen, mit schlechteren Wärmeübergangskoeffizienten, Kontaktrohre zu verschließen.

Bevorzugt können die alternierend einander gegenüberliegenden Durchtrittsöffnungen der Umlenkbleche an die seitlichen Begrenzungen des Bündels von Kontaktrohren angepasst werden.

In einer weiteren Ausführungsform ist es möglich, im inneren Bereich des Reaktors, wo die Strömungswege des Wärmeträgers am kürzesten und somit die Wärmeübergangskoeffizienten am größten sind, strömungsstörende Einbauten, beispielsweise Lochbleche, vorzusehen, um die Wärmeübergangskoeffizienten über den gesamten Reaktorquerschnitt einander weiter anzugleichen.

Insbesondere kann die Änderung der Anordnung der Kontaktrohre zwecks Angleichung der Strömungswege des Wärmeträgers in jedem Reaktorquerschnitt nach dem folgenden Algorithmus erfolgen:

- zunächst wird der Rohrspiegel, das heißt die Anordnung der Kontaktrohre in einem Reaktorquerschnitt gezeichnet, wobei die beiden einander gegenüberliegenden seitlichen Begrenzungen des Bündels von Kontaktrohren im Spiegel Kreissehnen sind; und wobei im Rohrspiegel die Hauptströmungsrichtung des Wärmeträgers als y-Koordinate und die Koordinate rechtwinklig hierzu, in der Ebene des Reaktorquerschnitts als x-Koordinate bezeichnet wird;
- der Rohrspiegel wird anschließend in n zu den Kreissehnen parallele und zu einander äquidistante Geraden unterteilt;

- jeder der Geraden n wird in m äquidistante Punkte aufgeteilt, die fortlaufend mit einer natürlichen Zahl i durchnummeriert werden, wobei i = 1 bis m, und wobei die äußersten Punkte, das heißt die Punkte i = 1 und die Punkte i = m jeweils auf dem äußersten Rand des Rohrspiegels, das heißt am Mantel des Reaktors liegen;
- die jeweils i-ten Punkte auf den Geraden werden miteinander verbunden, wobei die Strömungswege erhalten werden, deren Längen durch die nachfolgenden Iterationsschritte angeglichen werden:

    (1) ermittle den längsten Strömungsweg $i_{max}$ und kürzesten Strömungsweg $i_{min}$; falls mehr als ein längster bzw. kürzester Strömungsweg existieren, wähle zufällig einen aus,

    (2) ermittle die Differenz der Längen der Strömungswege von kürzestem und längstem Strömungsweg, d.h. die Ungleichheit der Strömungsweglängen; ist die Ungleichheit der Strömungsweglängen weniger als 1 % des Mittelwerts der Längen der Strömungswege, gehe zu (8);

    (3) verkürze den längsten Strömungsweg $i_{max}$ um 25 % der Ungleichheit; indem die y-Koordinate der beiden äußeren Punkte, d.h. des Punktes auf der 1. und des Punktes auf der n-ten Geraden auf diesem Strömungsweg gleichmäßig verringert und die dazwischen liegenden Punkte anschließend wieder äquidistant verteilt werden;

    (4) analog wird der kürzeste Strömungsweg so verlängert, dass die Fläche des Rohrspiegels, d.h. die durch die beiden Kreissehnen und den Reaktormantel begrenzte Fläche sich im Vergleich zur vorigen Iteration nicht verändert;

    (5) handelt es sich nicht um die äußeren Strömungswege i = 1 bzw. i = m, werden bei dieser Veränderung der y-Koordinate der Punkte die x-Koordinaten nicht verändert;

    (6) handelt es sich um eine der beiden äußeren Kurven, so wird die x-Koordinate derart geändert, dass die Punkte weiterhin auf dem Reaktormantel liegen; ist eine x-Verschiebung eines Punktes notwendig, werden alle Punkte auf der Linie i = n so verschoben, dass sie wieder äquidistant zueinander sind;

    (7) gehe zurück zu (1)

    (8) Ende der Iteration.

Nach dem obigen Algorithmus wird lediglich die Hauptströmungsrichtung des Wärmeträgers in der Ebene des Reaktorquerschnitts, die vorliegend als y-Koordinate bezeichnet wird, zwischen den einander gegenüberliegenden Durchtrittsöffnungen an der Reaktorinnenwand betrachtet. Diese vereinfachte Betrachtung ist in der Regel bereits ausreichend als Grundlage für die Ermittlung einer geänderten Anordnung der Kontaktrohre.

Bei einer genaueren Betrachtung der Strömungswege des Wärmeträgers ist jedoch die Strömungsrichtung senkrecht zu der obigen Strömungsrichtung in der Ebene des Reaktorquerschnitts zu berücksichtigen und die vorliegend als x-Koordinate bezeichnet wird.

Wird nur die Hauptströmungsrichtung, entlang der y-Koordinate, über den Reaktorquerschnitt berücksichtigt, so ist die Anordnung der Kontaktrohre dergestalt zu ändern, dass die Strömungswege in jedem Reaktorquerschnitt, vom ersten bis zum letzten Kontaktrohr jeweils gleich sind.

Da jedoch vorteilhaft zusätzlich die Strömung des Wärmeträgers entlang der x-Koordinate zu berücksichtigen ist, ist, zwecks Ausgleich der Strömung auch zusätzlich in x-Richtung, die Anordnung der Kontaktrohre dergestalt anzupassen, dass die Strömungswege des Wärmeträgers am Reaktorinnenmantel um bis zu 25 % kürzer sind als entlang der Mittelachse.

Indem durch die erfindungsgemäße Anordnung der Kontaktrohre der Strömungswege insgesamt gegenüber einem Reaktor nach dem Stand der Technik, entsprechend WO 03/072237, verkürzt werden, ist der Druckverlust des Wärmeträgers bei gleicher Geschwindigkeit des Wärmeträgers insgesamt geringer. Entsprechend sind auch die Bypassströmung des Wärmeträgers durch die Spalte zwischen den Umlenkblechen und den Kontaktrohren geringer und die erforderlichen Umwälzmengen an Wärmeträger geringer.

Gegenstand der Erfindung ist auch ein Verfahren zur Herstellung von Phosgen durch Gasphasenreaktion von Kohlenmonoxid und Chlor in Gegenwart eines Feststoffkatalysators in einem Reaktor mit einem Bündel von Kontaktrohren enthaltend den Feststoffkatalysator, und wobei die Kontaktrohre an den beiden Enden in jeweils einem Rohrboden eingeschweißt sind, mit Zuführung der Edukte am oberen Ende der Kontaktrohre und Ableitung des gasförmigen Reaktionsgemisches am unteren Ende der Kontaktrohre, jeweils über eine Haube, sowie mit Zu- bzw. Abführeinrichtungen für einen flüssigen Wärmeträger in den Mantelraum zwischen den Kontaktrohren, wobei die Strömung des Wärmeträgers im Zwischenraum zwischen den Kontaktrohren mittels Umlenkblechen geleitet wird, die alternierend einander gegenüberliegende Durchtrittsöffnungen an der Reaktorinnenwand freilassen, in denen die Umlenkbleche kreissegmentförmige Aussparungen aufweisen, und wobei der Reaktor im Bereich der Durchtrittsöffnungen unberohrt ist, dass dadurch gekennzeichnet ist, dass die Wärmeübergangskoeffizienten an der Grenzschicht zwischen den Kontaktrohren und dem Wärmeträger über jeden Reaktorquerschnitt vergleichmäßigt werden, indem die Strömungswege des Wärmeträgers in jedem Reaktorquerschnitt, jeweils gemessen vom ersten bis zum letzten Kontaktrohr in Strömungsrichtung des Wärmeträgers durch eine Anordnung der Kontaktrohre einander angeglichen werden dergestalt, dass zumindest eine seitliche Begrenzung des Bündels von Kontaktrohren zu dem unberohrten Bereich in einer horizontalen Ebene zwischen zwei aufeinanderfolgenden Umlenkblechen eine Kreisbogenform aufweist.

Bevorzugt können die Strömungswege des Wärmeträgers in jedem Reaktorquerschnitt, jeweils gemessen vom ersten bis zum letzten Kontaktrohr in Strömungsrichtung des Wärmeträgers zusätzlich durch den Einbau von Dummy-Rohren einander angeglichen werden.

Durch die erfindungsgemäße Anordnung der Kontaktrohre können die Wärmeübergangskoeffizienten bei großen Reaktoren zur Herstellung von Phosgen, mit Durchmessern von 3,5 m und größer, über jeden Reaktorquerschnitt von Unterschieden von etwa 13 bis 20 % bei Reaktoren nach dem Stand der Technik entsprechend WO 03/072237 auf wesentlich niedrigere Werte im Bereich von etwa 8 bis 10 %, reduziert werden.

Die Erfindung wird im Folgenden anhand eines Ausführungsbeispiels sowie einer Zeichnung näher erläutert.

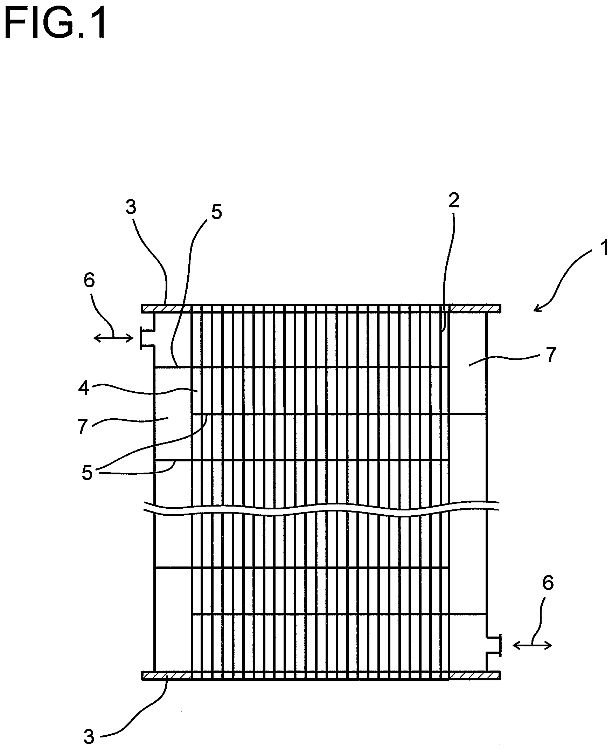

Zu einem großtechnischen Reaktor entsprechend der schematischen Darstellung in Figur 1 wurde Phosgen hergestellt, mit einer Anordnung der Kontaktrohre entsprechend dem aus der Druckschrift WO 03/072237 bekannten Stand der Technik, zum Vergleich, und mit angepasster Anordnung der Kontaktrohre entsprechend der Erfindung.

Es werden 2914 Kontaktrohre, mit einem Außendurchmesser von 44,5 mm, einer Wandstärke von 2,6 mm, einer Länge von 3800 mm, einer Rohrteilung von 55 mm und einer Anordnung an den Ecken gleichseitiger Dreiecke eingesetzt.

Die Kontaktrohre waren aus Duplexstahl 1.4462 hergestellt.

Der Reaktor wurde mit Monochlorbenzol als Wärmeträger gekühlt, wobei das Monochlorbenzol durch den Reaktormantel von oben nach unten, mit mäanderförmiger Strömung um die Umlenkbleche, geführt wurde. Die Kühlmittelmenge betrug 1800 t/h Monochlorbenzol, die Eintrittstemperatur des Monochlorbenzols war 67°C und die Austrittstemperatur des Monochlorbenzols 78,4°C beim Ausführungsbeispiel nach dem Stand der Technik und beim Ausführungsbeispiel nach der Erfindung ohne erhöhter Phosgenlast, jedoch 80,8°C beim Ausführungsbeispiel nach der Erfindung mit erhöhter Phosgenlast.

Durch die Kontaktrohre wurde von oben nach unten Kohlenmonoxid und Chlor über Aktivkohle als Feststoffkatalysator geleitet, wobei der Kohlenmonoxidüberschuss 3,5 Gew.-%, die Eintrittstemperatur des Reaktionsgasgemisches 40°C und der Eintrittsdruck des Reaktionsgemisches 4,8 bar absolut betrug.

Die erzeugte Phosgenmenge betrug beim Ausführungsbeispiel nach dem Stand der Technik und beim ersten Beispiel nach der Erfindung jeweils 26717 kg/h, beim zweiten Ausführungsbeispiel nach der Erfindung 32060 kg/h.

Die Wärmeabfuhr betrug 8,25 Megawatt beim Ausführungsbeispiel nach dem Stand der Technik und beim ersten Ausführungsbeispiel nach der Erfindung, 9,9 Megawatt beim zweiten Ausführungsbeispiel nach der Erfindung.

Beim Ausführungsbeispiel nach dem Stand der Technik wurde ein schlechtester Wärmeübergangskoeffizient von 1000 W/m$^2$/K auf der Kühlmittelseite erreicht. Dieser limitierte die Wärmeabfuhr und führte bei einer Phosgenlast von 2,1 kg Phosgen/m$^2$/s zu einer Innenwandtemperatur der Kontaktrohre von 168°C.

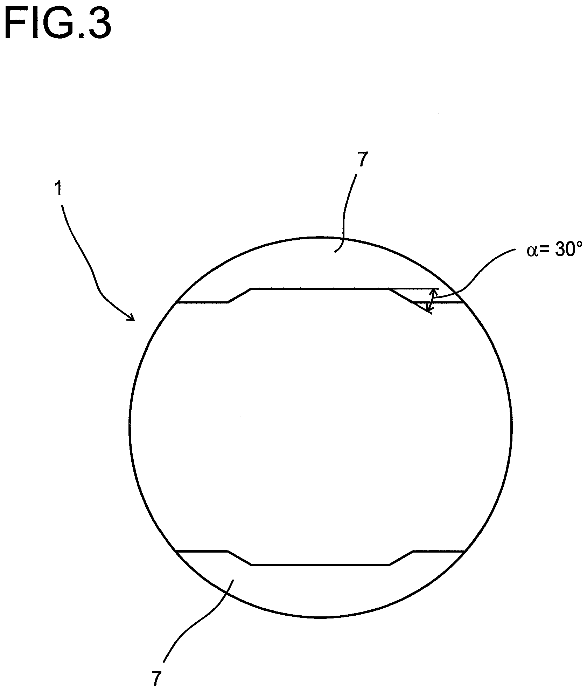

Nach dem erfindungsgemäßen Beispiel wurde die Rohranordnung dergestalt geändert, dass der Rohrspiegel der schematischen Darstellung in Figur 3 entsprach, wobei die Strömungswege des Wärmeträgers über den Reaktorquerschnitt einander angeglichen wurden. Dadurch wurde der schlechteste Wärmeübergangskoeffizient über den Reaktorquerschnitt auf 1150 W/m$^2$/K erhöht. Dies führte bei ansonsten unveränderten Verfahrensbedingungen zu einer niedrigeren Innenwandtemperatur der Kontaktrohre, von 160°C.

Da für den Werkstoff der Kontaktrohre eine Temperaturbelastung von bis zu 168°C unkritisch ist, bestand daher die Möglichkeit, die Phosgenbelastung für den Reaktor mit erfindungsgemäßer Anordnung der Kontaktrohre zu erhöhen. Um ebenfalls auf eine Rohrinnenwandtemperatur von unkritischen 168°C zu gelangen, war es möglich, die Phosgenlast um 20%, von 2,1 kg Phosgen/m$^2$/s auf 2,52 kg Phosgen pro m$^2$/s zu steigern.

In der Zeichnung zeigen im Einzelnen:

Figur 1      die schematische Darstellung eines Längsschnitts durch eine Ausführungsform eines erfindungsgemäßen Reaktors,

Figur 2A bis 2C      jeweils Temperaturverteilungen im Rohrspiegel, wobei Figur 2A einer Anordnung der Kontaktrohre nach dem Stand der Technik und die Figuren 2B und 2C erfindungsgemäßen Anordnungen der Kontaktrohre entsprechen,

Figur 3      einen Rohrspiegel durch eine Ausführungsform eines erfindungsgemäßen Reaktors, wie er in den Ausführungsbeispielen eingesetzt wurde,

Figur 4      eine Ausführungsform eines erfindungsgemäßen Reaktors mit zusätzlicher Anordnung von Dummy-Rohren in den korrosionsgefährdeten Bereichen,

Figur 5      eine schematische Darstellung der Hauptströmungsrichtung des Wär-

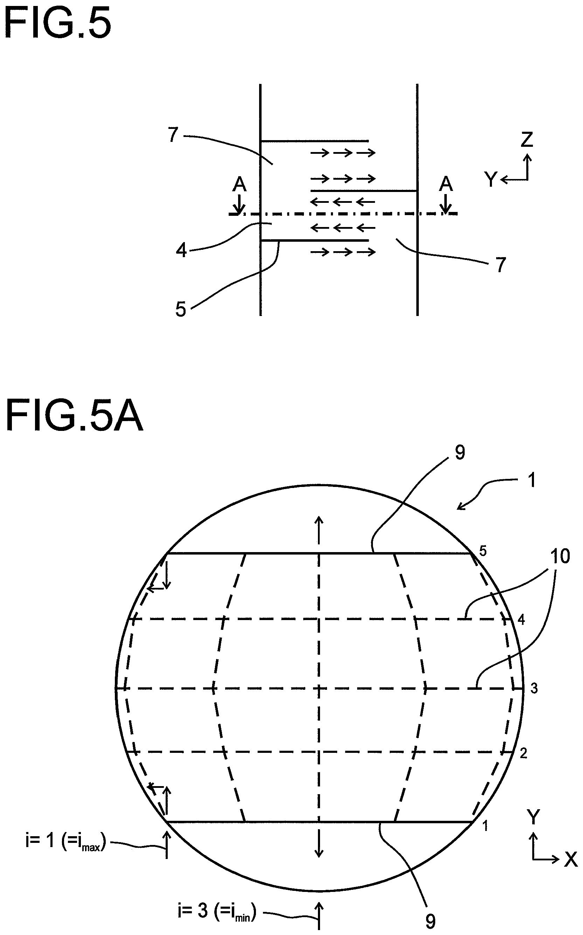

metträgers in den Bereichen zwischen den Umlenkblechen, mit Darstellung des Schnittes A-A in Figur 5A,

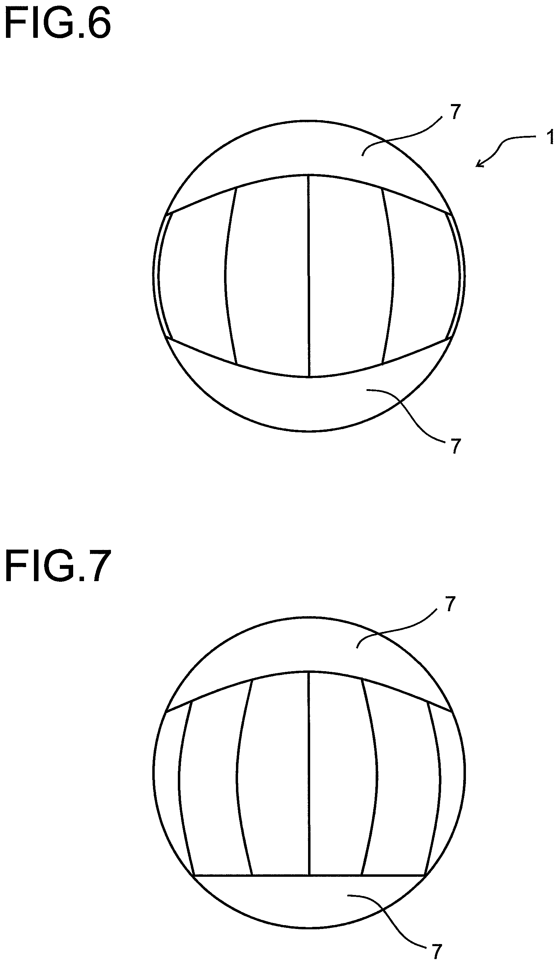

Figur 6      eine schematische Darstellung eines erfindungsgemäß geänderten Rohrspiegels, und

Figur 7      eine schematische Darstellung eines weiteren erfindungsgemäßen Rohrspiegels.

Der in Figur 1 schematisch im Längsschnitt dargestellte Reaktor 1 weist ein Bündel von Kontaktrohren 2 auf, die in einem oberen und in einem unteren Rohrboden 3 eingeschweißt sind.

Durch den Mantelraum zwischen den Kontaktrohren 2 wird ein Wärmeträger 6 geleitet, in einer Ausführungsform mit Einleitung des Wärmeträgers 6 am oberen Ende und Abzug am unteren Ende des Reaktors und in einer weiteren Ausführungsform mit umgekehrter Durchleitung des Wärmeträgers, das heißt mit Zuführung am unteren Ende des Reaktors und Ableitung am oberen Ende des Reaktors.

Die Strömung des Wärmeträgers 6 durch den Mantelraum 4 um die Kontaktrohre 2 wird durch Umlenkbleche 5 gelenkt, die horizontal im Reaktor angeordnet sind, und die alternierend am Reaktorinnenmantel Durchtrittsöffnungen 7 freilassen.

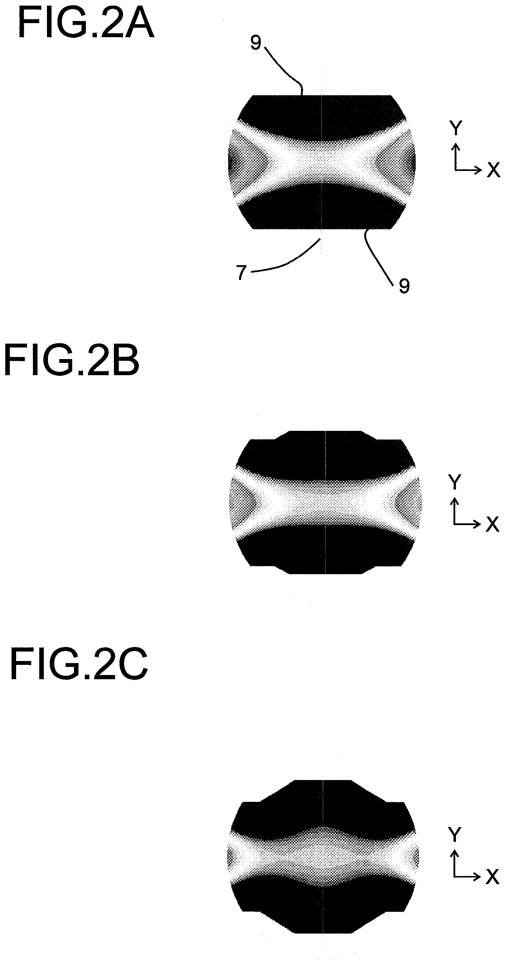

Figur 2A zeigt einen Rohrspiegel, das heißt eine Anordnung der Kontaktrohre in einem Querschnitt zwischen zwei aufeinander folgenden Umlenkblechen, nach dem Stand der Technik, wobei die einander gegenüberliegenden seitlichen Begrenzungen des Rohrspiegels Kreissehnen 9 sind. Die Hauptströmungsrichtung des Wärmeträgers zwischen den beiden einander gegenüberliegenden rohrfreien Bereichen 7 ist mit y bezeichnet, und die Strömungsrichtung senkrecht hierzu, in der Querschnittsebene durch den Reaktor, als x-Koordinate.

Aus Figur 1 ist eine Verteilung der Wärmeübergangskoeffizienten über den Rohrspiegel zu erkennen, wobei die niedrigsten, schlechtesten Wärmeübergangskoeffizienten, von 1168 W/m$^2$/K an den beiden Rohrinnenseiten, auf den Extremen der x-Koordinate, gemessen wurden, und die besten, größten Wärmeübergangskoeffizienten an den beiden Extremen, am Schnitt der y-Achse mit den Kreissehnen 9 gemessen wurden, und die 1500 W/m$^2$/K betrugen.

Figur 2B zeigt einen Rohrspiegel mit erfindungsgemäß geänderter Anordnung der Kontaktrohre, wobei die seitlichen Begrenzungen von Kreissehnen 9 im Stand der Technik zu einer polygonalen Linie hin geändert sind.

In Figur 2C ist diese Änderung deutlicher ausgeprägt. Entsprechend wurden niedrigste (schlechteste) Wärmeübergangskoeffizienten von 1308 W/m$^2$/K an den beiden Extremen auf der x-Achse, an der Rohrinnenwand, gemessen.

Die Darstellungen in Figur 2A bis 2C zeigen somit, dass bei einer erfindungsgemäß geänderten Anordnung der Kontaktrohre der schlechteste Wärmeübergangskoeffizient gegenüber dem Stand der Technik wesentlich erhöht wird und die korrosionsgefährdeten Bereiche entsprechend kleiner werden.

Figur 3 zeigt einen Rohrspiegel für eine Ausführungsform eines erfindungsgemäßen Reaktors, wie er in den Ausführungsbeispielen eingesetzt wurde. Bei einem Reaktor mit einem Innendurchmesser von 3550 mm oder die Anordnung der Kontaktrohre dergestalt geändert, dass die seitlichen Begrenzungen im Rohrspiegel von Kreissehnen zu einer polygonalen Linie hin mit den in Figur 3 angegebenen Abmessungen in mm.

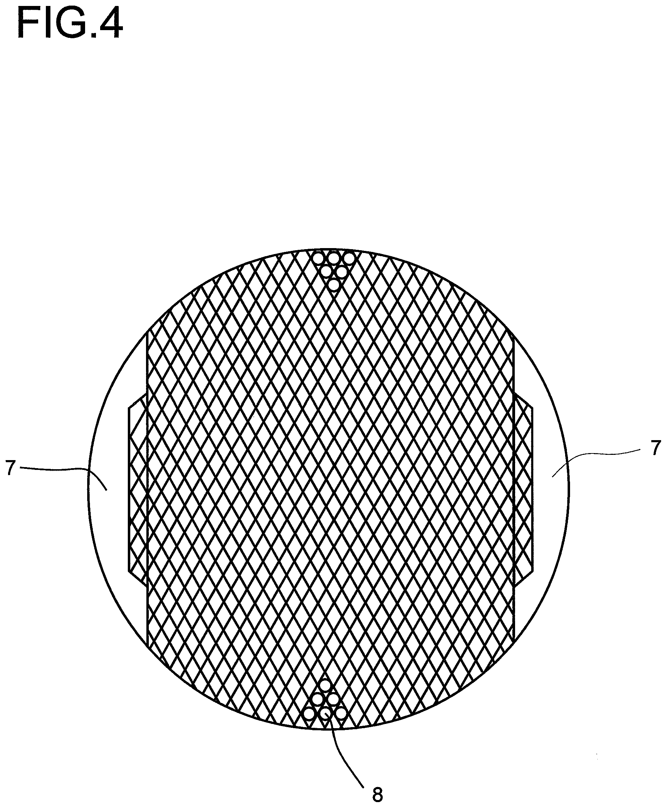

Figur 4 zeigt einen Querschnitt durch eine bevorzugte Ausführungsform für eine erfindungsgemäße Anordnung von Kontaktrohren, wobei in den korrosionsgefährdeten Bereichen zusätzlich Dummy-Rohr vorgesehen sind.

Figur 5 zeige eine vereinfachte schematische Darstellung für die Hauptströmungsrichtung des Wärmeträgers durch den Mantelraum 4 zwischen den Kontaktrohren, zwischen den Umlenkblechen 5, die am Reaktorinnenmantel jeweils alternierend einander gegenüberliegende Durchtrittsöffnungen 7 freilassen. Die Hauptströmungsrichtung ist als y-Richtung bezeichnet, die Längsrichtung durch den Reaktor als z-Koordinate.

Figur 5A zeigt eine Schnittdarstellung in der Ebene A-A durch den in Figur 5 schematisch dargestellten Reaktor, mit Erläuterung des iterativen Algorithmus zur Bestimmung der erfindungsgemäßen Anordnung der Kontaktrohre.

Der Schnitt in der Ebene A-A durch den Reaktor 1 verdeutlicht den Rohrspiegel nach dem Stand der Technik, von dem in der Erfindung ausgegangen wird, das heißt mit seitlichen Begrenzungen des Rohrspiegels in Form von Kreissehnen 9.

Die Hauptströmungsrichtung des Wärmeträgers ist als y-Koordinate bezeichnet und die Koordinate rechtwinklig hierzu, in der Ebene des Reaktorquerschnitts, als x-Koordinate.

Der Rohrspiegel ist in Beispiel 3 zu den Kreissehnen 9 in parallele und äquidistante Geraden 10 unterteilt. Ihre Gerade 10 ist in m, vorliegend 5 äquidistante Punkte aufgeteilt, wobei der erste und der letzte, vorliegend der erste und der fünfte Punkt, jeweils am äußersten Rand des Rohrspiegels, das heißt am Mantel des Reaktors 1, liegen. Die jeweils i-ten Punkte auf den Geraden 10 werden miteinander verbunden, wobei die Strömungswege erhalten werden, deren Längen durch die beschriebenen Iterationsschritte einander angeglichen werden.

Figur 6 verdeutlicht einen Rohrspiegel für eine erfindungsgemäße Anordnung der Kontaktrohre, worin die seitlichen Begrenzungen von Kreissehnen hin zu Kreisbögen geändert sind.

Figur 7 verdeutlicht eine weitere Ausführungsform für eine erfindungsgemäße Anordnung der Kontaktrohre, worin lediglich eine der seitlichen Begrenzungen des Rohrspiegels von einer Kreissehne hin zu einem Kreisbogen geändert ist. Die zweite seitliche Begrenzung des Rohrspiegels verbleibt in diesem Ausführungsbeispiel bei der Form einer Kreissehne 9.

**Patentansprüche**

1.  Zylinderförmiger Reaktor (1) zur Herstellung von Phosgen durch Gasphasenreaktion von Kohlenmonoxid und Chlor in Gegenwart eines Feststoffkatalysators, der in den Kontaktrohren (2) eines Bündels von Kontaktrohren (2) angeordnet ist, die an beiden Enden derselben in jeweils einem Rohrboden (3) eingeschweißt sind, mit Zuführung der Edukte am oberen Ende der Kontaktrohre (2) und Ableitung des gas förmigen Reaktionsgemisches am unteren Ende der Kontaktrohre (2), jeweils über eine Haube, sowie mit Zu- bzw. Abführeinrichtungen für einen flüssigen Wärmeträger (6) in den Mantelraum (4) zwischen den Kontaktrohren (2), wobei die Strömung des Wärmeträgers (6) im Zwischenraum (4) zwischen den Kontaktrohren (2) mittels Umlenkblechen (5) geleitet wird, die alternierend einander gegenüberliegende Durchtrittsöffnungen (7) an der Reaktorinnenwand freilassen, in denen die Umlenkbleche (5) kreissegmentförmige Aussparungen aufweisen, und wobei der Reaktor (1) im Bereich der Durchtrittsöffnungen (7) unberohrt ist,
    **dadurch gekennzeichnet,**
    **dass** die Wärmeübergangskoeffizienten an der Grenzschicht zwischen den Kontaktrohren (2) und dem Wärmeträger (6) über jeden Reaktorquerschnitt vergleichmäßigt sind, indem die Strömungswege des Wärmeträgers (6) in jedem Reaktorquerschnitt, jeweils gemessen vom ersten bis zum letzten Kontaktrohr (2) in Strömungsrichtung des Wärmeträgers (6) durch eine Anordnung der Kontaktrohre (2) einander angeglichen sind, dergestalt, dass zumindest eine seitliche Begrenzung des Bündels von Kontaktrohren (2) zu dem unberohrten Bereich in einer horizontalen Ebene zwischen zwei aufeinanderfolgenden Umlenkblechen (5) eine Kreisbogenform aufweist.

2.  Reaktor nach Anspruch 1, **dadurch gekennzeichnet, dass** die Strömungswege des Wärmeträgers (6) in jedem Reaktorquerschnitt, jeweils gemessen vom ersten bis zum letzten Kontaktrohr (2) in Strömungsrichtung des Wärmeträgers (6) durch den Einbau von Dummy-Rohren (8) einander angeglichen sind.

3.  Reaktor nach Anspruch 1 oder 2, **dadurch gekennzeichnet, dass** die geänderte Anordnung der Kontaktrohre (2) dadurch erfolgt, dass die beiden einander gegenüberliegenden seitlichen Begrenzungen des Bündels von Kontaktrohren (2) zu dem unberohrten Bereich eine Kreisbogenform aufweisen.

4.  Reaktor nach einem der Ansprüche 1 bis 3, **dadurch gekennzeichnet, dass** die Kreisbogenform der einander gegenüberliegenden seitlichen Begrenzungen des Bündels von Kontaktrohren (2) durch eine in einen Kreisbogen eingeschriebene polygonale Linie angenähert ist.

5.  Reaktor nach einem der Ansprüche 1 bis 4, **dadurch gekennzeichnet, dass** die alternierend einander gegenüberliegenden Durchtrittsöffnungen (7) der Umlenkbleche (5) an die seitlichen Begrenzungen des Bündels von Kontaktrohren (2) angepasst sind.

6.  Reaktor nach einem der Ansprüche 1 bis 5, **dadurch gekennzeichnet, dass** im inneren Bereich des Reaktors (1) strömungsstörende Einbauten, insbesondere Lochbleche, vorgesehen sind.

7.  Verfahren zur Herstellung von Phosgen durch Gasphasenreaktion von Kohlenmonoxid und Chlor in Gegenwart eines Feststoffkatalysators in einem zylinderförmigen Reaktor (1) mit einem Bündel von Kontaktrohren (2) enthaltend den Feststoffkatalysator, und wobei die Kontaktrohre (2) an den beiden Enden derselben in jeweils einem Rohrboden (3) eingeschweißt sind, mit Zuführung der Edukte am oberen Ende der Kontaktrohre (2) und Ableitung des gasförmigen Reaktionsgemisches am unteren Ende der Kontaktrohre (2), jeweils über eine Haube, sowie mit Zu- bzw. Abführeinrichtungen für einen flüssigen Wärmeträger (6) in den Mantelraum (4) zwischen den Kontaktrohren (2), wobei die Strömung des Wärmeträgers (6) im Zwischenraum (4) zwischen den Kontaktrohren (2) mittels Umlenkblechen (5) geleitet wird, die alternierend einander gegenüberliegende Durchtrittsöffnungen (7) an der Reaktorinnenwand freilassen, in denen die Umlenkbleche (5) kreissegmentförmige Aussparungen aufweisen, und wobei der Reaktor (1) im Bereich der Durchtrittsöffnungen (7) unberohrt ist, **dadurch gekennzeichnet, dass** die Wärmeübergangskoeffizienten an der Grenzschicht zwischen den Kontaktrohren (2) und dem Wärmeträger (6) über jeden Reaktorquerschnitt vergleichmäßigt werden, indem die Strömungswege des Wärmeträgers (6) in jedem Reaktorquerschnitt, jeweils gemessen vom ersten bis zum letzten Kontaktrohr (2) in Strömungsrichtung des Wärmeträgers (6) durch eine Anordnung der Kontaktrohre (2) einander angeglichen werden, dergestalt, dass zumindest eine seitliche Begrenzung des Bündels von Kontaktrohren (2) zu dem unberohrten Bereich in einer horizontalen Ebene zwischen zwei aufeinanderfolgenden Umlenkblechen (5) eine Kreisbogenform aufweist.

8. Verfahren nach Anspruch 7, **dadurch gekennzeichnet, dass** die Strömungswege des Wärmeträgers (6) in jedem Reaktorquerschnitt, jeweils gemessen vom ersten bis zum letzten Kontaktrohr (2) in Strömungsrichtung des Wärmeträgers (6) durch den Einbau von Dummy-Rohren (8) angeglichen werden.

**Claims**

1. A cylindrical reactor (1) for preparation of phosgene by gas phase reaction of carbon monoxide and chlorine in the presence of a solid-state catalyst, the latter being arranged in the contact tubes (2) of a bundle of contact tubes (2) which are welded at both ends thereof in in each case one tube plate (3), with feeding of the reactants at the upper end of the contact tubes (2) and discharge of the gaseous reaction mixture at the lower end of the contact tubes (2), in each case via a hood, and with feeding and discharge devices for a liquid heat carrier (6) in the shell space (4) between the contact tubes (2), wherein the flow of the heat carrier (6) in the intermediate space (4) between the contact tubes (2) is conducted by means of deflection plates (5), which leave free, on the inner reactor wall, passage openings (7) which are situated opposite one another in an alternating manner and in which the deflection plates (5) have circular segment-shaped cutouts, and wherein the reactor (1) is free of tubes in the region of the passage openings (7),
wherein
the heat transfer coefficients at the boundary layer between the contact tubes (2) and the heat carrier (6) are equalized over each reactor cross section in that the flow paths of the heat carrier (6) in each reactor cross section, in each case measured from the first to the last reactor tube (2) in the flow direction of the heat carrier (6), are matched to one another by way of an arrangement of the contact tubes (2) such that at least one lateral boundary of the bundle of contact tubes (2) with respect to the region free of tubes has a circular arc shape in a horizontal plane between two successive deflection plates (5).

2. The reactor according to claim 1, wherein the flow paths of the heat carrier (6) in each reactor cross section, in each case measured from the first to the last contact tube (2) in the flow direction of the heat carrier (6), are matched to one another by the installation of dummy tubes (8).

3. The reactor according to claim 1 or 2, wherein the altered arrangement of the contact tubes (2) is realized in that the two mutually opposite lateral boundaries of the bundle of contact tubes (2) with respect to the region free of tubes have a circular arc shape.

4. The reactor according to one of claims 1 to 3, wherein the circular arc shape of the mutually opposite lateral boundaries of the bundle of contact tubes (2) is approximated by a polygonal line inscribed in a circular arc.

5. The reactor according to one of claims 1 to 4, wherein the passage openings (7), situated opposite one another in an alternating manner, of the deflection plates (5) are matched to the lateral boundaries of the bundle of contact tubes (2).

6. The reactor according to one of claims 1 to 5, wherein flow-disturbing fixtures, in particular perforated plates, are provided in the inner region of the reactor (1).

7. A process for preparation of phosgene by gas phase reaction of carbon monoxide and chlorine in the presence of a solid-state catalyst in a cylindrical reactor (1), said cylindrical reactor having a bundle of contact tubes (2) comprising the solid-state catalyst, and wherein the contact tubes (2) are welded at the two ends thereof in in each case one tube plate (3), with feeding of the reactants at the upper end of the contact tubes (2) and discharge of the gaseous reaction mixture at the lower end of the contact tubes (2), in each case via a hood, and with feeding and discharge devices for a liquid heat carrier (6) in the shell space (4) between the contact tubes (2), wherein the flow of the heat carrier (6) in the intermediate space (4) between the contact tubes (2) is conducted by means of deflection plates (5), which leave free, on the inner reactor wall, passage openings (7) which are situated opposite one another in an alternating manner and in which the deflection plates (5) have circular segment-shaped cutouts, and wherein the reactor (1) is free of tubes in the region of the passage openings (7), wherein the heat transfer coefficients at the boundary layer between the contact tubes (2) and the heat carrier (6) are equalized over each reactor cross section in that the flow paths of the heat carrier (6) in each reactor cross section, in each case measured from the first to the last reactor tube (2) in the flow direction of the heat carrier (6), are matched to one another by way of an arrangement of the contact tubes (2) such that at least one lateral boundary of the bundle of contact tubes (2) with respect to the region free of tubes has a circular arc shape in a horizontal plane between two successive deflection plates (5).

8. The process according to claim 7, wherein the flow paths of the heat carrier (6) in each reactor cross section, in each case measured from the first to the last contact tube (2) in the flow direction of the heat carrier (6), are matched by the installation of dummy tubes (8).

## Revendications

1. Réacteur en forme de cylindre (1) destiné à produire du phosgène par réaction en phase gazeuse de monoxyde de carbone et de chlore en présence d'un catalyseur solide qui est disposé dans les tubes de contact (2) d'un faisceau de tubes de contact (2), lesquels sont respectivement soudés dans un fond de tube (3) aux deux extrémités de ceux-ci, avec acheminement des produits de départ au niveau de l'extrémité supérieure des tubes de contact (2) et évacuation du mélange de réaction gazeux au niveau de l'extrémité inférieure des tubes de contact (2) respectivement par le biais d'un capot, et comprenant aussi des dispositifs d'arrivée ou de départ pour un fluide caloporteur (6) liquide dans l'espace d'enveloppe (4) entre les tubes de contact (2), l'écoulement du fluide caloporteur (6) dans l'espace intermédiaire (4) entre les tubes de contact (2) étant guidé au moyen de chicanes (5) qui libèrent des ouvertures de passage (7) situées en alternance les unes en face des autres sur la paroi interne du réacteur, dans lesquelles les chicanes (5) possèdent des cavités en forme de segment de cercle et le réacteur (1) étant non pourvu de tubes dans la zone des ouvertures de passage (7),
**caractérisé en ce que** les coefficients de transmission de chaleur au niveau de la couche d'interface entre les tubes de contact (2) et le fluide caloporteur (6) sont homogénéisés sur chaque section transversale de réacteur du fait que les trajets d'écoulement du fluide caloporteur (6) dans chaque section transversale de réacteur, respectivement mesurés du premier au dernier tube de contact (2) dans le sens de l'écoulement du fluide caloporteur (6), sont mutuellement équilibrés par une disposition des tubes de contact (2) les uns par rapport aux autres, de sorte qu'au moins une limitation latérale du faisceau de tubes de contact (2) par rapport à la zone non pourvue de tubes présente une forme en arc de cercle dans un plan horizontal entre deux chicanes (5) successives.

2. Réacteur selon la revendication 1, **caractérisé en ce que** les trajets d'écoulement du fluide caloporteur (6) dans chaque section transversale de réacteur, respectivement mesurés du premier au dernier tube de contact (2) dans le sens de l'écoulement du fluide caloporteur (6), sont mutuellement équilibrés par l'installation de tubes factices (8).

3. Réacteur selon la revendication 1 ou 2, **caractérisé en ce que** la disposition modifiée des tubes de contact (2) est effectuée **en ce que** les deux limitations latérales se faisant mutuellement face du faisceau de tubes de contact (2) par rapport à la zone non pourvue de tubes présente une forme en arc de cercle.

4. Réacteur selon l'une des revendications 1 à 3, **caractérisé en ce que** la forme en arc de cercle des limitations latérales se faisant mutuellement face du faisceau de tubes de contact (2) est approchée par une ligne polygonale inscrite dans un arc de cercle.

5. Réacteur selon l'une des revendications 1 à 4, **caractérisé en ce que** les ouvertures de passage (7) des chicanes (5), situées en alternance les unes en face des autres, sont adaptées aux limitations latérales du faisceau de tubes de contact (2).

6. Réacteur selon l'une des revendications 1 à 5, **caractérisé en ce que** des éléments intégrés qui perturbent l'écoulement, notamment des tôles perforées, sont disposés dans la zone intérieure du réacteur (1).

7. Procédé de production de phosgène par réaction en phase gazeuse de monoxyde de carbone et de chlore en présence d'un catalyseur solide dans un réacteur (1) de forme cylindrique, comprenant un faisceau de tubes de contact (2) contenant le catalyseur solide, et les tubes de contact (2) étant respectivement soudés dans un fond de tube (3) aux deux extrémités de ceux-ci, avec acheminement des produits de départ au niveau de l'extrémité supérieure des tubes de contact (2) et évacuation du mélange de réaction gazeux au niveau de l'extrémité inférieure des tubes de contact (2) respectivement par le biais d'un capot, et comprenant aussi des dispositifs d'arrivée ou de départ pour un fluide caloporteur (6) liquide dans l'espace d'enveloppe (4) entre les tubes de contact (2), l'écoulement du fluide caloporteur (6) dans l'espace intermédiaire (4) entre les tubes de contact (2) étant guidé au moyen de chicanes (5) qui libèrent des ouvertures de passage (7) situées en alternance les unes en face des autres sur la paroi interne du réacteur, dans lesquelles les chicanes (5) possèdent des cavités en forme de segment de cercle et le réacteur (1) étant non pourvu de tubes dans la zone des ouvertures de passage (7), **caractérisé en ce que** les coefficients de transmission de chaleur au niveau de la couche d'interface entre les tubes de contact (2) et le fluide caloporteur (6) sont homogénéisés sur chaque section transversale de réacteur du fait que les trajets d'écoulement du fluide caloporteur (6) dans chaque section transversale de réacteur, respectivement mesurés du premier au dernier tube de contact (2) dans le sens de l'écoulement du fluide caloporteur (6), sont mutuellement équilibrés par une disposition des tubes de contact (2) les uns par rapport aux autres, de sorte qu'au moins une limitation latérale du faisceau de tubes de contact (2) par rapport à la zone non pourvue de tubes présente une forme en arc de cercle dans un plan horizontal entre deux chicanes (5) successives.

8.  Procédé selon la revendication 7, **caractérisé en ce que** les trajets d'écoulement du fluide caloporteur (6) dans chaque section transversale de réacteur, respectivement mesurés du premier au dernier tube de contact (2) dans le sens de l'écoulement du fluide caloporteur (6), sont mutuellement équilibrés par l'installation de tubes factices (8).

# FIG.1

# FIG.2A

# FIG.2B

# FIG.2C

# FIG.3

# FIG.4

# FIG.5

# FIG.5A

# FIG.6

# FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03072237 A
- EP 1813346 A1

**In der Beschreibung aufgeführte Nicht-Patentliteratur**

- Ullmanns Enzyklopädie der technischen Chemie. vol. A 19, 413-414